# EUROPÄISCHE PATENTSCHRIFT

(11) **EP 1 365 612 B1**
(45) Veröffentlichungstag und Bekanntmachung des Hinweises auf die Patenterteilung: **23.08.2006**
(21) Anmeldenummer: 02011287.6
(22) Anmeldetag: 22.05.2002
(51) Int. Cl.: H04Q 7/38

(54) **Verfahren und Vorrichtung zur Mobilitätssteuerung in einem Kommunikationssystem**
Method and apparatus for mobility control in a communication system
Méthode et appareil pour commande de la mobilité dans un système de communication

(43) Veröffentlichungstag der Anmeldung: 26.11.2003
(73) Patentinhaber: SIEMENS AKTIENGESELLSCHAFT, 80333 München (DE)
(72) Erfinder: Breitbach, Markus, Dr., 89081 Ulm (DE); Flender, Hans-Ulrich, 89081 Ulm (DE); Frey, Andreas, Dr., 73312 Geislingen (DE)

(56) Entgegenhaltungen:
- EP-A- 1 058 408
- WO-A-00/33478
- WO-A-02/21478
- US-A- 5 966 668

## Beschreibung

Die Erfindung bezieht sich auf ein Verfahren zur Mobilitätssteuerung in einem Kommunikationssystem mit den oberbegrifflichen Merkmalen der unabhängigen Patentansprüche.

Allgemein bekannt sind Funk-Kommunikationssysteme gemäß zum Beispiel dem Standard GSM (Global System for Mobile Communication) oder UMTS (Universal Mobile Telecommunications System). Bei diesen Systemen kommunizieren mobile teilnehmerseitige Stationen, beispielsweise Mobilfunktelefone oder Notebook-Rechner mit netzseitigen ortsfesten Netzzugangsstationen über Funkschnittstellen. Ein Hauptproblem derartiger zellular aufgebauter Mobilfunksysteme besteht in der möglichst optimalen Ausnutzung der Funkressourcen bei einer Bedienung von verschiedenen teilnehmerseitigen Stationen mit jeweils sehr unterschiedlichen Charakteristika. Beispielsweise können für die Kommunikation seitens verschiedener teilnehmerseitiger Stationen verschiedene Dienste beansprucht werden, zum Beispiel einerseits Dienste, welche eine hohe Datenrate erforderlich machen, und andererseits Dienste, welche eine niedrige Datenrate erforderlich machen. Insbesondere Datenflussmerkmale und Qualitätsanforderungen können sehr verschieden sein. Ein weiteres Problem besteht darin, dass sich die teilnehmerseitigen Stationen mit Blick auf ihre gegebene Mobilität räumlich vollkommen willkürlich und innerhalb einer nur technisch begrenzten Geschwindigkeitsspanne bewegen können.

Aus netzseitiger Sicht ist somit vorab nicht bekannt, wie viele teilnehmerseitige Stationen eine Kommunikationsverbindung anfordern, welche Diensteanforderungen dabei bestehen und wie das räumliche Mobilitätsverhalten der Stationen ist. Die Planung von Mobilfunknetzen ist daher schwierig durchzuführen und zu einem großen Teil mit Unsicherheiten behaftet.

Während des Betriebs müssen komplexe Algorithmen in den Zugangsnetzen verwendet werden, damit die Funkressourcen und die netzinternen Ressourcen möglichst gut verwaltet und zugeteilt werden können. Einerseits soll die mögliche Ausnutzung der vorhandenen Ressourcen möglichst hoch sein, andererseits darf das Netz jedoch nicht in einen Überlastzustand geraten.

Um den teilnehmerseitigen Stationen weitgehend unabhängig von ihren individuellen Eigenschaften und Bedürfnissen alle vom Kommunikationsnetz bereitgestellten Dienste anbieten zu können, verfügt das UMTS-Kommunikationsnetz sowohl im Zugangsbereich als auch im Kernnetz über alle dafür erforderlichen Funktionalitäten. Die Mobilität wird mit einer großen Anzahl von Funktionen und Mechanismen, zum Beispiel Ortsmanagement (Location Management), Übergabefunktionen (Handover) und Leistungssteuerung (Power Control) unterstützt, was das Kommunikationsnetz jedoch mit Blick auf die Teilnehmermobilität nicht nur flexibel sondern auch kompliziert, teuer und schwer planbar macht.

Die EP 1 058 408 A1 offenbart ein System, bei dem schnurlosen Einheiten (wireless units) in eine Mobilität betreffende Kategorien eingeteilt werden. Diese Kategorien umfassen dabei keine, eine beschränkte sowie eine vollständige Mobilität, wobei die beschränkte Mobilität auf eine bestimmte Heimatzelle beschränkt ist. Für den Fall, dass eine schnurlose Einheit ohne oder mit beschränkter Mobilität Signale einer Heimat-Basisstation gut empfangen kann, wird eine Makrodiversität zur Übertragung von Signalen zu der schnurlosen Einheit ausgeschaltet. Befindet sich die schnurlose Einheit ohne oder mit beschränkter Mobilität hingegen in der Nähe der Grenze der Heimatzelle der Heimat-Basisstation und der Empfang von Signalen der Heimat-Baissstation ist vergleichsweise schlecht, so wird eine Makrodiversität verwendet, jedoch verhindert, dass die Verbindung zu einer benachbarten Zelle weitergereicht wird.

Die US 5,966,668 zeigt ein Verfahren zur Rekonfigurierung von Basisstationen eines Radio-Local-Loop-Systems. In derartigen Systemen wird die so genannte letzte Meile zu Teilnehmer-Endgeräten anstelle einer leitungsgebundenen Übertragung mittels einer Funkübertragung überbrückt. Bei diesen Systemen wird per se angenommen, dass die Teilnehmer-Endgeräte nur eine begrenzte Mobilität besitzen. Für eine Versorgung eines Teilnehmer-Endgerätes ist eine Basisstation in der Lage, eine erste Funkzelle in zumindest zwei Funkzellen aufzuspalten, das Teilnehmer-Endgerät einer durch die Spaltung neu geschaffenen zweiten Funkzelle zuzuordnen und nachfolgend über diese zweite Funkzelle zu versorgen.

Die Aufgabe der Erfindung besteht darin, ein Verfahren zur Steuerung einer teilnehmerseitigen Station unter Berücksichtigung vonMobilitätsinformationen sowie eine teilnehmerseitige Station in einem Funk-Kommunikationssystem anzugeben..

Diese Aufgabe wird durch ein Verfahren zur Steuerung einer teilnehmerseitigen Station in einem Funk-Kommunikationssystem sowie durch eine teilnehmerseitige Station eines FunkKommunikationssystems mit den Merkmalen der unabhängigen Patentansprüche gelöst. Vorteilhafte Ausgestaltungen sind Gegenstand abhängiger Ansprüche.

Eine vorteilhafte Lösung bietet insbesondere ein Verfahren zur Steuerung einer teilnehmerseitigen Station unter Berücksichtigung von Mobilitätsinformation in einem FunkKommunikationssystem, bei dem über eine Verbindung zwischen zumindest einer teilnehmerseitigen Station, zum Beispiel einem Mobilfunktelefon oder einem funkgestützten Notebook, und einer netzseitigen Zugangsstation eine Mobilitätsinformation bezüglich der tatsächlichen Mobilität der teilnehmerseitigen Station übertragen wird. Die tatsächliche Mobilität bezieht sich dabei auf eine momentane Mobilität oder eine tatsächlich mögliche Mobilität in der absehbaren zeitlichen Zukunft. Unter einer teilnehmerseitigen Station ist dabei eine funkgestützte Station, insbesondere also ein Datenendgerät zu verstehen, wobei der Begriff teilnehmerseitig im wesentlichen nur zur Verdeutlichung des Unterschiedes zu der netzseitigen Zugangsstation bzw. Basisstation zu sehen ist. Mobilitätsinformationen können in vielerlei Form bereitstehen, beispielsweise als diskrete digitale Datenwerte oder auch als analoge Werte, wie ein analog messbarer Leistungswert eines Signals.

Gemäß besonders bevorzugter Ausführungsformen gibt die Mobilitätsinformation Informationen über eine Begrenzung der räumlichen oder geschwindigkeitsabhängigen Mobilität. Dabei ist es möglich, die Information als momentan tatsächlich zutreffenden Wert anzugeben, insbesondere bei beiderseits der Funkschnittstelle ortsfesten Stationen. Möglich ist auch, die Mobilitätsinformation als maximal zulässigen Mobilitätswert anzugeben, also zum Beispiel bezüglich einer nur innerhalb einer Funkzelle, einer Gruppe von Funkzellen oder möglicherweise sogar nur innerhalb eines bestimmten Raumbereichs innerhalb einer Funkzelle zulässigen Bewegung. Entsprechend können auch maximal zulässige Geschwindigkeiten der Bewegung der Station angegeben werden, wobei zweckmäßigerweise als mögliche Geschwindigkeiten typische maximale Geschwindigkeiten eines gehenden, eines radfahrenden und eines mit einem Kraftfahrzeug fahrenden Teilnehmers als übliche Grenzwerte ansetzbar sind. Diesbezüglich ist auch eine Einteilung in feste Mobilitätsklassen zweckmäßig.

Neben der Möglichkeit, die Mobilitätsinformation lediglich als statistisch verwertbare Information von der teilnehmerseitigen Station aus an die netzseitige Zugangsstation zu übertragen, ist auch eine feste Begrenzung möglich. Das heißt, es ist auch eine feste Zuweisung einer einzigen zwingenden Mobilität, beispielsweise dem Stillstand an einem einzigen Ort, oder die Zuweisung eines Mobilitätsspektrums oder die Zuweisung einer Mobilitätsobergrenze möglich.

Derartige Zuweisungen können durch einen Teilnehmer, das heißt Benutzer der teilnehmerseitigen Station manuell eingegeben werden. Zusätzlich oder alternativ kann bei Inbetriebnahme eines bestimmten Dienstes diensteabhängig automatisch oder durch die manuelle Anwahl des Dienstes durch den Teilnehmer geräteseitig eine erforderliche Mobilität bestimmt und eine entsprechende Mobilitätsinformation erzeugt werden. Möglich sind auch starre Mobilitätsbegrenzungen durch den Hersteller des Gerätes, beispielsweise um ein kostengünstig erwerbbares Gerät hinsichtlich seiner Benutzungsmöglichkeiten als rein stationäres Gerät im Sinne eines Festanschlusses oder als nur zu Fuß mitführbares Gerät mit einer geringen zulässigen Bewegungsgeschwindigkeit zu begrenzen.

Auch netzseitig können Bedingungen vorgegeben werden, beispielsweise bei einer hohen Netzauslastung in der Form, dass der teilnehmerseitigen Station nur Zugriffe dann auf bestimmte Dienste freigegeben werden, wenn die teilnehmerseitige Station sich nicht oder nur innerhalb sehr enger Mobilitätsgrenzen bewegt. Letztendlich kann auch der Netzbetreiber Beschränkungen auferlegen, vergleichbar denen des Geräteherstellers.

Vorteilhafterweise wird in der teilnehmerseitigen Station eine ab sofort oder zukünftig zu berücksichtigende Mobilitätsinformation dauerhaft oder temporär abgespeichert. Insbesondere ist es möglich, bei einer dauerhaften Abspeicherung einer maximal zulässigen Mobilität zusätzlich eine temporäre Mobilitätsbeschränkung auf einen noch beschränkteren Mobilitätsbereich in einem weiteren Speicherbereich abzuspeichern, wobei die teilnehmerseitige Station jeweils die geringste zulässige Mobilitätsinformation als Kriterium für den Betrieb ansetzt.

Für den Fall, dass die teilnehmerseitige Station die gesetzten Mobilitätsgrenzen überschreitet oder zu überschreiten droht, kann eine Warnfunktion aktiviert werden, welche den Teilnehmer auf die Gefahr eines Verbindungsabbruchs oder die Gefahr einer Einschränkung der Ressourcen aufmerksam macht. Wird eine solche Warnung nicht vorgesehen oder ignoriert, so wird die Verbindung zweckmäßigerweise abgebrochen oder entsprechend auf eine begrenzte verfügbare Ressource umgeschaltet.

Eine Vorrichtung zum Durchführen eines solchen Verfahrens weist zweckmäßigerweise eine Sende- und/oder Empfangseinrichtung auf, über welche neben eigentlichen Nutzdaten auch Informationen wie die Mobilitätsinformation übertragen werden können. Außerdem ist der in der Regel vorhandene Gerätespeicher mit einem Speicherraum für Mobilitätsinformationen ausgestaltet. Letztendlich sind für die Funktionalität der Steuereinrichtung entsprechende Routinen erforderlich, welche zur Verwaltung der Verfahren und der verknüpften Anwendungen verwendet werden.

Der Lösungsansatz geht somit von Situationen aus, in denen es hinsichtlich der für eine teilnehmerseitige Station erforderlichen Mobilität Beschränkungen gibt. Die Beschränkungen können beispielsweise dadurch entstehen, dass eine eigentlich mobile Station tatsächlich ortsfest installiert wird und eine Mobilität nicht erforderlich oder gar nicht möglich ist. Beschränkungen bzw. Einschränkungen können sich auch dadurch ergeben, dass eine teilnehmerseitige Station nur von Personen mitgeführt wird, welche sich ausschließlich zu Fuß bewegen, weshalb nur eine Geschwindigkeitsspanne mit sehr niedrigen Geschwindigkeiten zu berücksichtigen ist. Denkbar sind auch teilnehmerseitige Stationen, welche zeitweilig nur langsam oder gar nicht bewegt werden und zu anderen Zeiten in einem Auto mitgeführt werden, wobei der Teilnehmer einer solchen Station die Geschwindigkeitsanforderungen bzw. Mobilitätsanforderungen für die nächste Benutzungsdauer kennt. Ortsfeste Stationen können beispielsweise ein statisches Terminal sein, welches als drahtloser Ortsanschluss (WLL - Wireless local Loup) einen bisher üblichen Telefon-Festnetzanschluss ersetzt. Ortsfeste Stationen können zum Beispiel auch statische Messstationen sein, welche momentane Messwerte über ein Mobilfunknetz zu einer Überwachungszentrale senden.

Ein anderer Lösungsansatz geht von der Netzseite aus und berücksichtigt zum Beispiel Situationen, bei denen die Gefahr einer Überlast für das Kommunikationsnetz aufgrund einer sehr großen Anzahl gleichzeitig zu unterstützender teilnehmerseitiger Stationen besteht. In derartigen Situationen sind sich schnell bewegende teilnehmerseitige Stationen, also Stationen mit einer besonders hohen Anforderung an die Netzressourcen, von dem Kommunikationsnetz nicht oder nur begrenzt verwaltbar. Im Interesse des Netzes kann es daher liegen, derartige Stationen nicht oder nur mit festgelegten Beschränkungen zu unterstützen.

Durch die Umsetzung solcher Verfahren und Vorrichtungen ergibt sich eine überraschend große Anzahl von Vorteilen.

Dadurch, dass die beteiligten netzseitigen und teilnehmerseitigen Stationen vor einem Verbindungsaufbau oder auch im Laufe einer bestehenden Verbindung Informationen über die geplante oder zulässige Mobilität austauschen können, ist eine genauere Vorhersage der Zelllast-(Cell-Load)-Schwankungen möglich, was von den Algorithmen zur Laststeuerung und auch von den Algorithmen zur Zulassung weiterer hinzukommender Stationen verwendet werden kann. Während bei ungewisser Mobilität netzseitig davon ausgegangen werden muss, dass für alle teilnehmerseitigen Stationen plötzlich Bewegungen mit höherer Geschwindigkeit zu verwalten sind, kann bei Kenntnis einer Vielzahl teilnehmerseitiger Stationen mit nur geringen oder gar keinen Bewegungen netzseitig eine größere Anzahl von teilnehmerseitigen Stationen zum Aufbau von Kommunikationsverbindungen zugelassen werden.

Für den Fall, dass netzseitig bekannt ist, dass eine teilnehmerseitige Station sich nicht oder nur langsam bewegt, kann der netzseitige Verwaltungsaufwand für diese Station stark reduziert werden. Beispielsweise müssen Algorithmen zur Bestimmung des aktuellen Aufenthaltsortes (Location Updates) und Algorithmen zur Vorbereitung von Übergaben an andere Funknetzzellen (Hand over) entsprechend nicht oder nur seltener durchgeführt werden. Für den Fall der Durchführung einer Bestimmung des aktuellen Aufenthaltsortes einer teilnehmerseitigen Station kann eine gezieltere Stationssuche (Paging) durchgeführt werden, da der Aufenthaltsort der teilnehmerseitigen Station mit Blick auf eine einzige Zelle oder eine begrenzte Umgebung um eine bestimmte Zelle herum bekannt ist.

Bei Kommunikationssystemen mit einer hierarchischen Zellstrukturumgebung (HCS - Hierarchical Cell Structure) ist eine verbesserte Zuordnung von teilnehmerseitigen Stationen zu den Zellen einer solchen Umgebung möglich, wobei auch eine verbesserte Vorhersage der Last in den einzelnen Ebenen der Zellstruktur möglich ist.

Wenn bekannt ist, dass eine teilnehmerseitige Station sich nicht oder nur sehr begrenzt bewegt, ist es auch möglich, die Parameter des Funkkanals durch Mittelwertbildungen über einen wesentlich längeren Zeitraum als normalerweise üblich zu bestimmen, so dass diese dann genauer ermittelt werden können. Mit solchen genaueren Werten ist dann eine optimalere Berechnung von Koeffizienten zur Ansteuerung z.B. eines adaptiven Antennenfeldes (antenna area) möglich. Dies macht auch eine Verwendung verbesserter Mechanismen für adaptive Antennenfelder, zum Beispiel so genannte Smart Antennas möglich. Wenn bekannt ist, dass sich der Standort einer teilnehmerseitigen Station nicht oder nur begrenzt verändert hat, ist beim Verbindungsaufbau auch kein Hochfahren der Leistung (Ramp-Up) beim willkürlichen Zufallszugriff (Random Access) erforderlich, weil von früheren Zugriffsversuchen bekannt ist, welche Anfangsleistung erforderlich ist, damit die netzseitige Station die Verbindungsanforderung mit ausreichender Leistung empfängt. Bei ortsfesten bzw. statischen teilnehmerseitigen Stationen kann idealerweise die geringst erforderliche Anfangsleistung verwendet werden. Dadurch wird neben der Interferenz auf der Funkschnittstelle auch die Last in der netzseitigen Station reduziert und letztendlich die Zeitdauer für den Aufbau der RRC-Verbindung (RRC: Radio Resource Control) verkürzt.

Auch in umgekehrter Senderichtung, das heißt von einer netzseitigen Station zu einer teilnehmerseitigen Station kann mit einer geringst erforderlichen Leistung gesendet werden, wenn netzseitig bekannt ist, dass sich die teilnehmerseitige Station seit dem letzten Sendevorgang nicht von der netzseitigen Station entfernt hat.

Ortsfeste oder sich nur in einem begrenzten Raum bewegende teilnehmerseitige Stationen sind auch als zuverlässige Relaisstationen einsetzbar. Als Beispiel sind dabei Mechanismen, wie bei ODMA (Opportunity Driven Multiple Access) anführbar, bei denen es möglich ist, teilnehmerseitige Stationen als Relaisstationen zwischen einer netzseitigen Station und anderen entfernteren teilnehmerseitigen Stationen zu verwenden, wodurch eine Erweiterung des Abdeckungsraumes aus Sicht einer ortsfesten Station ermöglicht wird. Da es sich bei solchen Relaisstationen um einerseits sendende und andererseits empfangende Stationen handelt, kann das Konzept auch auf allgemein zwei, eine erste und eine zweite miteinander kommunizierende Stationen ausgedehnt werden.

Ortsfeste teilnehmerseitige Stationen sind auch als lokale Messeinheiten (LMU - Location Measurement Unit für Lokalisierungsdienste (LCS-LoCation Service) einsetzbar. Dabei ergibt sich zusätzlich die Möglichkeit, dass den teilnehmerseitigen Stationen bzw. den diesen zugeordneten Teilnehmern Preisnachlässe oder Guthaben gewährt werden können, wenn sie dem Betreiber des Netzes bzw. dessen Stationen bei der Messung von Netzparametern, insbesondere von Positionen anderer teilnehmerseitiger Stationen helfen. Eine verbesserte Netzplanung ist insbesondere dann möglich, wenn Informationen über die Anzahl und gegebenenfalls den Aufenthaltsort statischer teilnehmerseitiger Stationen bekannt sind oder über einen Zeitraum ermittelt werden können.

Vorteilhafterweise ist für teilnehmerseitige Stationen, die ortsfest sind oder sich mit nur begrenzten Geschwindigkeiten bis beispielsweise 50 km/h bewegen, auch der Einsatz von Betriebsarten und Prozeduren möglich, welche eine Sendeleistungsreduzierung bei Stationen mit niedrigen Geschwindigkeiten bewirken. Im Fall von UMTS als Kommunikationssystem ist beispielsweise eine spezielle Sende-Diversität, die sogenannte Closed Loop Mode 2 TX-Diversity, einsetzbar.

Prozeduren für die Zellauswahl und Neuauswahl von Zellen können seltener ausgeführt oder ganz abgeschaltet werden, wenn bekannt ist, dass sich eine teilnehmerseitige Station nicht oder nur in einem beschränkten Raum bewegt. Derartige Prozeduren (Cell Selection, Cell Re-Selection) können bei teilnehmerseitigen Stationen entsprechend ausgeschaltet werden, was zu einer Reduzierung der Signalisierungslast und einer Reduzierung der in der teilnehmerseitigen Station erforderlichen Messungen führt und somit den Batterieverbrauch in der teilnehmerseitigen Station reduziert. Für den Fall, dass in der teilnehmerseitigen Station spezielle Algorithmen zur Überwachung der Geschwindigkeit bzw. des Sendeablaufs bei Geschwindigkeiten über einer Schwellgeschwindigkeit durchgeführt werden, ist es möglich, derartige Zusatzprozeduren in den Prozeduren der Zellauswahl und Zell-Neuauswahl abzuschalten, was ebenfalls zu einer Reduzierung der Messungen bzw. einer Reduzierung des Rechenaufwands in der entsprechenden teilnehmerseitigen Station führt.

Bei hierarchischen Zellstrukturen kann einer ortsfesten oder sich nur begrenzt bewegenden bzw. nur sehr langsam bewegenden teilnehmerseitigen Station eine Frequenz zugeordnet werden, deren Pfadverlust zur nächsten netzseitigen Station gering ist. Für diesen Zweck kann beispielsweise eine RRC-Messung, z.B. das sogenannte measurement event 2a (Ereignisfall 2a), verwendet werden, welche anzeigt, wenn sich die bestgeeignete Frequenz geändert hat und ein Wechsel sinnvoll ist. Das entsprechende Ereigniskriterium kann in großen Abständen für jeweils kurze Zeit gesetzt werden, um die Systemkapazität optimal auszunutzen und die Dienstequalität zu erhöhen.

Mobilitätsinformationen können auch bei der Bestimmung von RRC-Zuständen eingesetzt werden. Bei einer sich nur langsam bewegenden teilnehmerseitigen Station, die sich nur innerhalb einer begrenzten Umgebung oder zumindest nur mit einer sehr geringen Geschwindigkeit von zum Beispiel maximal 5 km/h bewegt, ist es zum Beispiel nicht erforderlich, die teilnehmerseitige Station in den sogenannten URA_PCH-Zustand zu schalten, wobei URA_PCH ein UMTS spezifischer Zustand ist, bei dem die Position der teilnehmerseitigen Station UE auf der Ebene des UTRAN-Lokalisierungsbereichs (Location Area) bekannt ist. Dadurch kann die Last im System reduziert werden, die ansonsten durch ein aufwendigeres Suchen nach Stationen (Paging) entsteht.

Auch bei der Übergabesteuerung (handover control) ist eine Reduzierung des Aufwands erforderlich, da bei einer teilnehmerseitigen Station, die ortsfest ist oder sich nur innerhalb einer beschränkten Umgebung bewegt, keine Messungen auf Nachbarzellen der aktuellen oder einer anderen Frequenz (intra- bzw. interfrequency measurements) durchgeführt bzw. gesetzt werden müssen, was den Messaufwand in der entsprechenden teilnehmerseitigen Station reduziert.

Vorteile ergeben sich auch bei der Bitratenzuweisung (bit rate allocation). Teilnehmerseitigen Stationen, die sich nahe einer netzseitigen Station befinden, kann ohne Kapazitätsverlust eine höhere Datenrate zugewiesen werden. Haben die netzseitigen Stationen und Einrichtungen Kenntnis, beispielsweise über einen Lokalisierungsdienst oder Messungen, dass sich eine teilnehmerseitige Station nahe der netzseitigen Station befindet und sich die teilnehmerseitige Station nicht bewegt, so kann gleich eine höhere Datenrate bzw. eine AMR-Betriebsart mit höherer Rate (AMR: Adaptive Multi Rate) zugewiesen werden, als dies bei gleicher Zelllast für teilnehmerseitige Stationen im Zellrandbereich möglich wäre.

Vorteilhaft sind Mobilitätsinformationen auch in Verbindung mit RRC-Verbindungsmobilitäts-Prozeduren einsetzbar. Generell können solche Prozeduren bei teilnehmerseitigen Stationen, welche ortsfest sind oder sich nur innerhalb eines begrenzten Raumes bewegen, auf ein Minimum reduziert werden, was die erforderliche Signalisierung und letztendlich den Energieverbrauch minimiert.

Eine Reduzierung der Leistungssteuerzyklen (Power Control Cycle) ist ebenfalls möglich, wenn bekannt ist, dass sich eine oder mehrere teilnehmerseitige Stationen nicht oder nur innerhalb bestimmter Orts- oder Geschwindigkeitsschranken bewegen.

Die vorstehenden Vorteile ergeben sich durch die Ausnutzung von Mobilitätsinformationen bei Kenntnis einer nur beschränkten oder gar nicht vorhandenen Mobilität teilnehmerseitiger Stationen. Die Mobilitätsbeschränkungen können dabei teilnehmerseitig vorgegeben sein, können aber auch seitens netzseitiger Stationen den teilnehmerseitigen Stationen auferlegt werden.

Auf den ersten Blick widerspricht die beschriebene Verfahrensweise den üblichen Gedanken zum Aufbau und Betrieb eines Funk-Kommunikationsnetzes, welches auf eine prinzipiell uneingeschränkte Mobilität als stets angestrebtes Merkmal gegenüber Festnetzen ausgelegt ist. Wie aus den Vorteilen ersichtlich, wird aber gerade durch eine derartige dauerhafte oder temporäre Beschränkung der Mobilität einzelner oder aller kommunizierenden Stationen eine Optimierung der Netzressourcen ermöglicht.

Ausführungsbeispiele werden nachfolgend anhand der Zeichnung näher erläutert. Es zeigen:
- Fig. 1: eine teilnehmerseitige Station, welche einer netzseitigen Station ohne Aufforderung eine Mobilitätsinformation mitteilt;
- Fig. 2: eine teilnehmerseitige Station, welche dem Netz auf Anfrage eine Mobilitätsinformation mitteilt;
- Fig. 3: eine teilnehmerseitige Station, der seitens des Netzes eine Mobilitätsbeschränkung auferlegt wird;
- Fig. 4: eine Vielzahl teilnehmerseitiger Stationen, welchen seitens des Netzes Mobilitätsinformationen übermittelt werden, und
- Fig. 5: ein Schema der Verteilung von Mobilitätsinformationen innerhalb eines Kommunikationsnetzes und zu externen Einrichtungen.

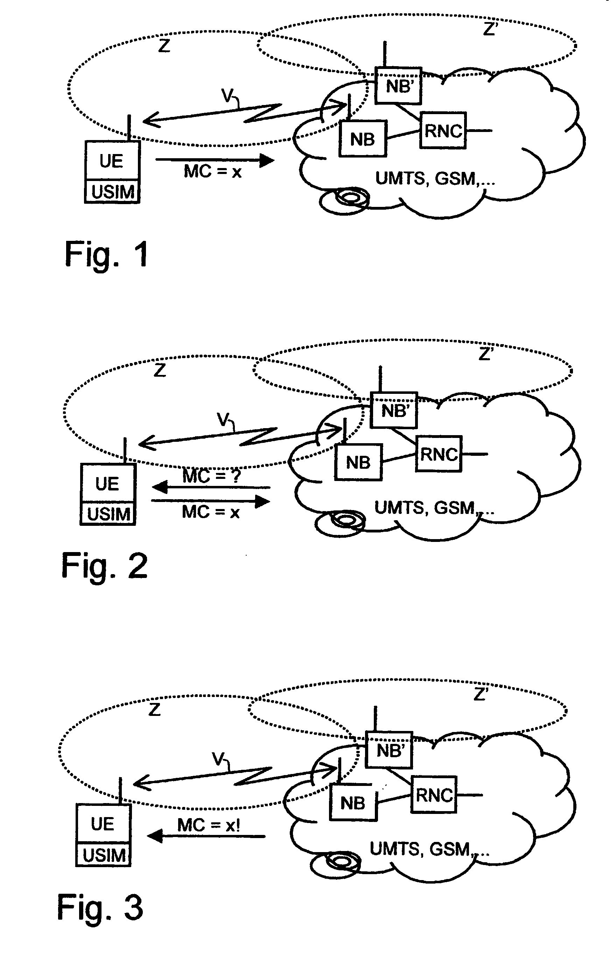

Wie aus Fig. 1 ersichtlich, besteht ein Kommunikationssystem aus einer Vielzahl verschiedenartiger Einrichtungen. Teilnehmerseitig handelt es sich um stationäre oder mobile teilnehmerseitige Stationen UE, beispielsweise Mobilfunktelefone oder Computer mit Funk-Schnittstellenkarten. Diese teilnehmerseitigen Stationen UE kommunizieren über Funkschnittstellen V mit netzseitigen Zugangsstationen NB, welche auch als Basisstationen oder Node B bezeichnet werden. Die Funkschnittstellen V können dabei innerhalb eines Überdeckungsbereiches einer Funkzelle Z aufgebaut werden, wobei sich eine oder mehrere solcher Funkzellen Z um die Antennen einer Zugangsstation NB ausbilden können.

Netzseitig sind eine oder mehrere solcher Zugangsstationen NB mit einer Funknetz-Steuereinrichtung RNC (Radio Network Controller) und darüber mit weiteren Netzeinrichtungen verbunden. Als beispielhaftes Netz sind hier Einrichtungen des UMTS-Mobilfunksystems skizziert, eine Übertragung auf andere Netze, beispielsweise das GSM oder reine Datennetze ist jedoch umsetzbar.

Vorteilhafter Weise soll bei dem Aufbau einer Verbindung V zwischen einer teilnehmerseitigen Station UE und einer netzseitigen Zugangsstation NB eine Mobilitätsinformation MC ausgetauscht werden. Alternativ oder zusätzlich ist aber auch die Übertragung von Mobilitätsinformationen MC (Mobility Class) während einer bestehenden Verbindung V möglich.

Eine besonders einfach verwendbare Mobilitätsinformation MC ist durch eine standardisierbare Klassifizierung in nachfolgend beschriebene Mobilitätsklassen MC-1,... MC-7 möglich. Als Mobilitätsinformation sind zum Beispiel auch diskrete Messwerte aus einem kontinuierlichen Spektrum verwendbar, wobei einzelne Spektrenbereiche dann vorteilhafter Weise einzelnen Mobilitätsklassen zugeordnet werden können. Während fest vorgegebene Mobilitätsklassen zweckmäßiger Weise standardisiert werden sollten, wäre der Einsatz von nicht fest vorgegebenen Mobilitätsklassen-Kennungen auch ohne eine feste Standardisierung einfach einsetzbar.

Eine Mobilitätsklassifizierung wird vorteilhafter Weise durch verschiedene Angaben charakterisiert, insbesondere durch eine maximal zulässige bzw. maximal mögliche Geschwindigkeit, mit der sich eine teilnehmerseitige Station UE bewegen kann, und/oder durch einen maximalen räumlichen Bewegungsraum, innerhalb dessen sich eine teilnehmerseitige Station UE bewegen kann. Mit Blick auf den räumlichen Bewegungsraum der teilnehmerseitigen Station UE kann wiederum eine Untergliederung vorgenommen werden. Kriterien für eine solche Untergliederung können beispielsweise eine maximal mögliche Bewegung der teilnehmerseitigen Station UE von einem bestimmten Standort, eine relative Bewegungsmöglichkeit der teilnehmerseitigen Station UE innerhalb eines vorgegebenen Zeitraums und/oder eine räumliche Bewegungsmöglichkeit der teilnehmerseitigen Station UE innerhalb eines vorgegebenen Raumbereichs, zum Beispiel innerhalb der Innenumgebung (indoor environment) eines bestimmten Gebäudes oder Gebäudekomplexes sein.

Eine beispielhafte tabellarische Klassifizierung in Mobilitätsklassen MC-1 - MC-7 kann aufgebaut sein, wie folgt:
MC-1: Teilnehmerseitige Stationen UE, welche statisch sind bzw. sich nicht von ihrem Standort wegbewegen, werden einer ersten Mobilitätsklasse MC-1 zugeordnet.
MC-2: Teilnehmerseitige Stationen UE, die sich mit einer Geschwindigkeit von zum Beispiel bis maximal 5 km/h bewegen können oder bewegen dürfen und die sich zudem nur innerhalb einer vorgegebenen Umgebung, zum Beispiel einem Gebäudebereich bewegen können bzw. dürfen, werden einer zweiten Mobilitätsklasse MC-2 zugeordnet.
MC-3: Eine dritte Mobilitätsklasse MC-3 wird teilnehmerseitigen Stationen UE zugeordnet, welche sich mit einer begrenzten geringen Geschwindigkeit, zum Beispiel maximal 5 km/h bewegen können bzw. dürfen, dabei aber keiner Einschränkung bezüglich der räumlichen Bewegung unterliegen.
MC-4: Eine vierte Mobilitätsklasse MC-4 wird für eine mittlere beschränkte Mobilität vorgesehen, also zum Beispiel teilnehmerseitige Stationen UE, welche sich mit einer höheren Geschwindigkeit bis zum Beispiel 50 km/h bewegen können, jedoch dabei auch auf einen bestimmten Raumbereich beschränkt sind.
MC-5: Eine fünfte Mobilitätsklasse MC-5 repräsentiert eine mittlere Mobilität, wird also beispielsweise für eine teilnehmerseitige Station UE verwendet, welche sich ohne eine räumliche Beschränkung mit einer höheren Geschwindigkeit von zum Beispiel maximal 50 km/h bewegen kann bzw. darf.
MC-6: Eine sechste Mobilitätsklasse MC-6 repräsentiert eine Standard-Mobilität, wie sie für übliche Mobilfunktelefone als stationäre Station UE sinnvoll einsetzbar ist. Übliche Bedingungen entsprechen dabei einer fehlenden räumlichen Beschränkung und maximalen Geschwindigkeiten von zum Beispiel 120 km/h.
MC-7: Eine siebte Mobilitätsklasse MC-7 wird für eine unbeschränkte Mobilität eingesetzt, bei der eine teilnehmerseitige Station UE weder einer räumlichen noch einer geschwindigkeitsmäßigen Beschränkung unterliegt. Diese siebte Mobilitätsklasse entspricht der derzeit bei allen Prozeduren berücksichtigten Situation und macht das Bereitstellen einer großen Menge an Ressourcen erforderlich.

Die Mobilitätsbeschränkungen bzw. die Zuordnung von Mobilitätsklassen kann auf verschiedene Art und Weise erfolgen. Einerseits kann einer teilnehmerseitigen Station UE eine feste und nicht änderbare Mobilitätsklasse zugeordnet sein. Andererseits oder alternativ kann eine Mobilitätsklasse der teilnehmerseitigen Station UE aber auch nach Bedarf zugeordnet werden. Diese Zuordnung kann dabei teilnehmerseitig erfolgen, also durch den Benutzer der teilnehmerseitigen Station manuell oder durch einen aktivierten Dienst automatisch vorgegeben werden. Die Zuordnung kann aber auch netzseitig erfolgen, beispielsweise um seitens des Netzes bei hoher Netzauslastung einer oder mehreren der teilnehmerseitigen Stationen UE eine maximale oder feste Mobilitätsklasse zuzuweisen.

Die Mobilitätsinformation bzw. die Mobilitätsklasse ist somit eine Information, welche als Informationselement zwischen teilnehmerseitigen Stationen UE und netzseitigen Stationen NB ausgetauscht wird. Der Informationsaustausch kann dabei in existierenden Nachrichten oder neuen eigenständigen Nachrichten zwischen den teilnehmerseitigen Stationen UE und den netzseitigen Zugangsstationen NB durchgeführt werden. Insbesondere werden derartige Informationen auch zwischen einzelnen Netzeinrichtungen innerhalb des Kommunikationsnetzes ausgetauscht.

Der Austausch von Mobilitätsinformationen kann dabei auf die Verbindung V zwischen einer einzelnen teilnehmerseitigen Station UE und der mit dieser kommunizierenden netzseitigen Zugangsstation NB beschränkt sein, wobei die netzseitige Zugangsstation NB gleichzeitig auch Kommunikationsverbindungen V zu anderen teilnehmerseitigen Stationen UE unterhalten kann. Möglich ist aber auch alternativ oder zusätzlich eine Übertragung von Mobilitätsinformationen MC, MC-1 - MC-7 über eine Vielzahl von Schnittstellen V seitens einer netzseitigen Zugangsstation NB an alle oder mehrere der mit dieser kommunizierenden teilnehmerseitigen Stationen UB.

Mit Blick auf den Begriff der Umgebung (environment) bzw. des Bewegungsraums gibt es eine weitere Unterteilungsmöglichkeit nach der Art der Umgebung. Neben der Unterteilung in eine einzelne oder eine Gruppe von Funkzellen Z, welche über bestimmte netzseitig zu definierende Eigenschaften zusammenhängen, sind auch andere Klassifizierungen möglich. Beispielsweise kann unterschieden werden zwischen einer Umgebung mit Bedingungen, die sich bei einem Betrieb ausschließlich innerhalb eines Gebäudes oder eines Gebäudeteils (indoor environment) ergeben, und Bedingungen, die sich außerhalb von Gebäuden (outdoor environment) ergeben. Zusätzlich oder alternativ kann sich auch eine Untergliederung in Bedingungen ländlicher Gebiete (rural environment) und städtischer Gebiete (urban environment) anbieten.

Da in einem typischen Mobilfunk-Kommunikationsnetz UMTS die Umgebung einer oder mehrerer Zellen Z zugeordnet ist und das Netz die Zellen kontrolliert bzw. die Bewegung von teilnehmerseitigen Stationen UE in den Funkzellen Z erfassen und beschränken kann, hat das Kommunikationsnetz bzw. Kommunikationssystem folglich auch die Kontrolle über die vorstehend aufgeführten Umgebungen und Umgebungstypen.

Bei dem in Fig. 1 dargestellten Ausführungsbeispiel teilt die teilnehmerseitige Station UE dem Netz bzw. der netzseitigen Zugangsstation NB seine Mobilitätsklasse oder die entsprechende Mobilitätsinformation mit. Dies kann beim Verbindungsaufbau oder während einer bestehenden Verbindung, letzteres insbesondere bei Betriebsänderungen oder zyklisch durchgeführt werden. Betriebsänderungen liegen beispielsweise vor, wenn die teilnehmerseitige Station UE von einer Mobilitätsklasse MC-1 für einen ortsfesten Betrieb in eine Mobilitätsklasse MC-2 für einen Betrieb mit einer zulässigen langsamen Fortbewegung wechseln möchte. Betriebsbedingungen, welche eine Änderung der Mobilitätsklasse erforderlich machen, können aber auch dienstebedingt vorliegen.

Für den Fall einer durch den Benutzer der teilnehmerseitigen Station UE nicht änderbaren Mobilitätsinformation bzw. Mobilitätsklasse kann diese vorzugsweise in der den Teilnehmer bzw. die Einheit identifizierenden Karte (USIM: Universal Subscriber Identity Module) gespeichert oder temporär durch das kommunizierende Netz zugewiesen werden.

Im Fall einer durch den Benutzer der teilnehmerseitigen Station UE änderbaren Mobilitätsinformation bzw. Mobilitätsklasse kann die Änderung in einem Speicher der teilnehmerseitigen Station UE hinterlegt werden. Dabei ist auch eine zusätzliche generelle Beschränkung in der Art möglich, dass der Benutzer nur zwischen bestimmten Mobilitätsklassen auswählen kann, also zum Beispiel nur bis zu einer mittleren Mobilität oder einer auf einen bestimmten Raumbereich beschränkten Mobilität verfügen kann.

Vorteilhafter Weise ist eine Beschränkung der Mobilität durch die teilnehmerseitige Station UE mit einer netzseitigen Vergebührungsfunktion verknüpfbar. Beispielsweise kann eine nur geringe Vergebührung für ortsfeste teilnehmerseitige Stationen UE angewendet werden, während die fälligen Gebühren mit zunehmender Mobilität ansteigen. Eine derartige Vergebührungsverknüpfung bietet den Vorteil, dass Teilnehmer, welche nur eine beschränkte Mobilität benötigen, mit Blick auf niedrigere Gebühren eine entsprechend niedrige Mobilitätsklasse auswählen und dadurch letztendlich dem Teilnehmer Gebühren erspart bleiben und andererseits netzseitig eine Entlastung zugunsten der Kommunikation mit anderen teilnehmerseitigen Stationen UE ermöglicht wird. Der Teilnehmer kann somit über seine teilnehmerseitige Station UE direkt manuell oder automatisch eine gewünschte bzw. erforderliche Mobilität vorgeben.

Insbesondere kann die erforderliche Mobilitätsklasse auch durch die teilnehmerseitige Station UE selber bestimmt werden, und zwar nicht nur diensteabhängig, sondern auch anhand erfasster Messwerte. Beispielsweise kann die teilnehmerseitige Station UE anhand der empfangenen Sendeleistung eines Rundfunkkanals der kommunizierenden netzseitigen Zugangsstation NB feststellen, dass sie sich relativ zu dieser ortsfesten Zugangsstation NB bewegt. Anhand dieser erfassten Daten kann eine Geschwindigkeit bestimmt werden, so dass die teilnehmerseitige Station UE anhand der ermittelten Geschwindigkeit automatisch eine mindest erforderliche Mobilitätsklasse ermitteln und an die netzseitige Zugangsstation NB übermitteln kann. Andere Möglichkeiten zur Ermittlung der Ortsveränderung bzw. der Geschwindigkeit sind ebenfalls möglich. Beispielsweise kann die teilnehmerseitige Station UE über ein sogenanntes GPS-Modul (GPS: Global Positioning System) verfügen.

Die netzseitigen Stationen und Einrichtungen können auf empfangene Mobilitätsinformatinen auf vielerlei Art und Weise reagieren. Insbesondere ist eine aktive Zuweisung von Ressourcen zu der kommunizierenden teilnehmerseitigen Station UE oder anderen Stationen möglich.

Wie aus Fig. 2 ersichtlich, bei der baulich die gleichen Einrichtungen wie in Fig. 1 dargestellt sind, kann gemäß einer weiteren Ausführungsform auch eine Abfrage der Mobilitätsinformation oder Mobilitätsklasse seitens des Netzes, also über die netzseitige Zugangsstation NB durchgeführt werden. Die Option, dass die Zugangsstation NB die Mobilitätsklasse MC abfragt und daraufhin von der kommunizierenden teilnehmerseitigen Station UE deren momentane Mobilitätsinformation bzw. Mobilitätsklasse (MC = X!) mitgeteilt bekommt, ist beispielsweise in Übergangszeiträumen vorteilhaft, in denen nur einzelne Zugangsnetze und teilnehmerseitige Stationen UE mit einer Funktionalität zur Übermittlung von Mobilitätsinformationen ausgestattet sind, so dass in diesen Übergangszeiträumen die von anderen Zugangsnetzen nicht verwertbaren Übermittlungen von Mobilitätsinformationen unterdrückt werden.

Aus Fig. 3 ist ein Ausführungsbeispiel ersichtlich, bei dem bei gleicher Stationsanordnung wie in den Fig. 1 und 2 vom Zugangsnetz bzw. dessen Zugangsstation NB über die Schnittstelle V eine Mobilitätsklassenanweisung (MC = x!) für eine bestimmte oder eine maximale Mobilitätsklasse an die teilnehmerseitige Station UE übermittelt wird. Abgesehen von der Möglichkeit, die teilnehmerseitige Station UE direkt durch die Zugangsstation NB über eine direkte und eindeutige Kommunikationsverbindung V zwischen diesen beiden anzusprechen, besteht auch die Möglichkeit, derartige Anweisungen über Rundfunkkanäle, insbesondere sogenannte Broadcast-/Multicast-Kanäle zu übertragen. Per Standardisierung oder durch explizite Anweisungen kann auch bestimmt werden, ob die dedizierte Mitteilung der Mobilitätsklasse seitens der Zugangsstation NB an die teilnehmerseitige Station UE nur für eine bestimmte Zeitdauer und/oder nur für eine bestimmte Funkzelle Z gelten soll.

Sofern in der teilnehmerseitigen Station UE bereits eine Mobilitätsinformation oder Mobilitätsklasse MC-1 ... MC-7 abgespeichert ist, wird dieser Wert durch die angewiesene Information überschrieben. Alternativ oder zusätzlich sind auch Ausführungsformen möglich, bei denen die ursprüngliche Information in diesem oder einem anderen Speicherbereich erhalten bleibt, um nach Wegfall der netzseitig vorgegebenen Mobilitätsklasse durch beispielsweise Zeitablauf wieder in den ursprünglichen Zustand mit der ursprünglichen, z.B. teilnehmerseitig gewünschten Mobilitätsklasse zurückschalten zu können.

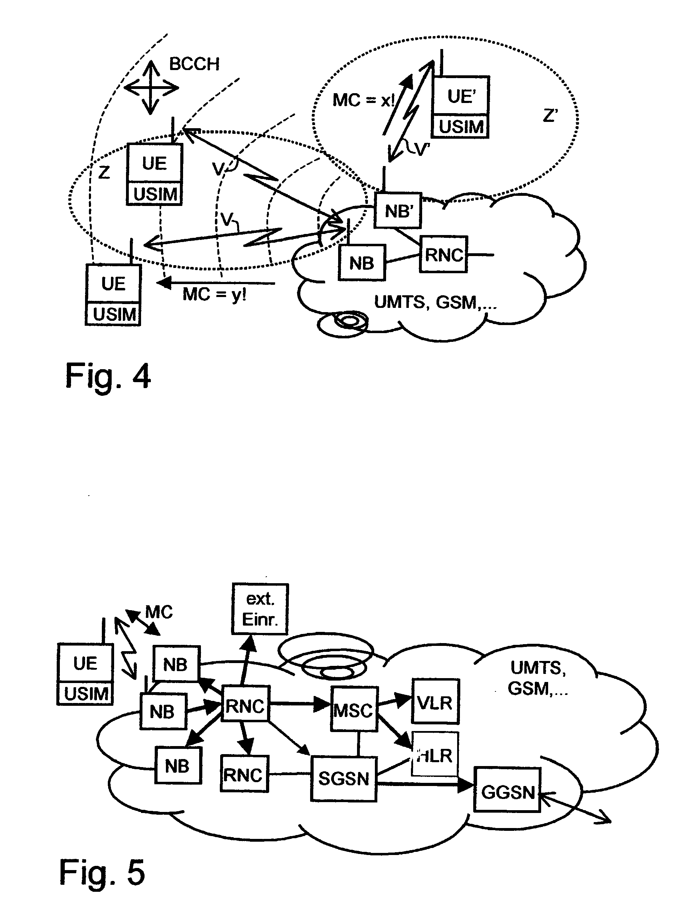

Wie aus Fig. 4 ersichtlich, bei der weitere teilnehmerseitige Stationen UE, UE' und eine weitere netzseitige Zugangsstation NB zum Versorgen einer eigenen Funkzelle Z' dargestellt sind, können derartige netzseitige Anweisungen zur Verwendung einer maximalen Mobilitätsklasse (MC = y!) nicht nur an eine einzelne bestimmte teilnehmerseitige Station UE, sondern an mehrere oder alle Stationen UE, UE' in einem Funkzellenbereich Z, Z' übermittelt werden. Insbesondere können in verschiedenen Funkzellen Z, Z' verschiedene zulässige Mobilitätsklassen zugewiesen werden (MC = y! bzw. MC = x!). Auch die Zuweisung verschiedener Mobilitätsklassen oder gar keiner Mobilitätsbeschränkungen für bestimmte einer Vielzahl von teilnehmerseitigen Stationen UE, UE' ist realisierbar.

Der Zeitpunkt, zu dem durch das Zugangsnetz bzw. das Mobilfunknetz UMTS eine bestimmte oder eine maximale Mobilitätsklasse MC für eine oder mehrere teilnehmerseitige Stationen UE, UE' gesetzt wird, ist für die Absendung entsprechender dedizierter Mitteilungen beliebig wählbar. Insbesondere können derartige Mitteilungen während des Verbindungsaufbaus oder auch im Laufe einer existierenden Verbindung V, V' übermittelt werden. Für die Übermittlung solcher Mitteilungen können neben dedizierten Verbindungen V, V' auch Rundfunkkanäle verwendet werden. Die Übermittlung der Mobilitätsinformation oder Mobilitätsklasse kann somit erfolgen, während eine oder mehrere teilnehmerseitige Stationen UE eine Verbindung zu der Funkzelle Z, Z' aufgebaut haben, in welcher die Rundfunkinformation bzw. Broadcast/Multicast ausgesendet werden. Die Mitteilung einer Mobilitätsinformation bzw. Mobilitätsklasse kann auch erfolgen, während eine teilnehmerseitige Station UE noch keine aufgebaute Verbindung V zum Mobilfunknetz hat, aber bereits über einen Rundfunkkanal eine entsprechende Information empfangen kann.

Außerdem sind Mitteilungen bezüglich Mobilitätsinformationen oder Mobilitätsklassen übermittelbar, während eine teilnehmerseitige Station UE' eine dedizierte Verbindung V' zu einer Zelle Z' aufgebaut hat, aber Rundfunk-Mitteilungen einer anderen sendenden Zelle Z mithören kann. Diese Möglichkeit ist insbesondere vorteilhaft, wenn sich eine teilnehmerseitige Station UE' in einer Zelle Z' befindet, in welcher nur eine niedrige Mobilitätsklasse für Datenübermittlungen zugelassen ist, diese teilnehmerseitige Station UE' sich jedoch in dem Überlappungsbereich zu der anderen Zelle Z befindet, in welcher geringere oder keine Mobilitätsbeschränkungen auferlegt werden und in welche die teilnehmerseitige Station die Datenverbindung V wechseln kann.

Im ersten der drei letztgenannten Fälle ist eine sofortige Gültigkeit der zugewiesenen Mobilitätsklasse MC sinnvoll, sofern nicht bedingt durch Standardisierungsvorgaben oder eine mit übermittelte Zeitangabe für die Gültigkeit eine spätere Umschaltung in die zugewiesene Mobilitätsklasse vorzunehmen ist. In den beiden anderen Fällen wird die MobilitätsklassenZuweisung zweckmäßigerweise gültig, sobald die teilnehmerseitige Station UE' eine Verbindung V' zu der sendenden Zelle Z' aufgebaut hat. Auch dabei ist eine spätere Aktivierung des zugewiesenen Mobilitätsklassenzustands möglich, wenn beispielsweise entsprechende zusätzliche Zeitinformationen für den Gültigkeitsbereich der Mobilitätsklassenzuweisung mit übertragen wurden.

Vorteilhafter Weise können sowohl die teilnehmerseitige Station UE als auch das Kommunikationsnetz UMTS bzw. dessen Zugangsstation NB zugewiesene Einschränkungen, insbesondere durch das Netz vorgegebene Einschränkungen der Mobilitätsklassen überprüfen. Zum Beispiel können dazu Informationen aus Geschwindigkeitsmessungen, Bewegungsmessungen mittels Auswertung seitens der teilnehmerseitigen Station UE und/oder Bewegungsmessungen seitens der Zugangsstation NB oder dieser übergeordneter Stationen RNC durchgeführt werden.

Wie dies aus Fig. 5 ersichtlich ist, können die Mobilitätsinformationen bzw. die Angaben über zugewiesene oder benötigte Mobilitätsklassen innerhalb der verschiedenen netzseitigen Einrichtungen und Stationen übertragen und ausgewertet werden. Zusätzlich zu den Darstellungen der vorstehenden Figuren zeigt Fig. 5 eine Verbindung der Funknetz-Steuereinrichtung RNC zu anderen Funknetz-Steuereinrichtungen RNC, externen Einrichtungen, Mobile-Schaltzentren MSC (Mobile Switching Center) und/oder einem dienenden GPRS-Unterstützungsknoten SGSN (Serving GPRS Support Node) (GPRS: General Packet Radio Service - allgemeiner Paketfunkdienst). Diese verschiedenen Stationen können wiederum untereinander verbunden sein. Insbesondere sind auch Verbindungen zu einem Besucherregister VLR (Visitor Location Register) und einem Heimatregister HLR (Home Location Register) schaltbar. Seitens des dienenden GPRS-Unterstützungsknotens SGSN kann über einen Gateway-GPRS-Unterstützungsknoten GGSN auch eine Paketdatenverbindung zu einem anderen Netz, beispielsweise einem Netz unter Steuerung des Internetprotokolls aufgebaut werden.

Zweckmäßiger Weise kann eine Information über eine vorgegebene oder eingeschränkte Mobilität bzw. Mobilitätsklasse MC sowie auch eine daraus abgeleitete Information für zum Beispiel statistische Zwecke oder Steuerungen bestimmter Netzfunktionen im Kommunikationsnetz UMTS verteilt werden. Ziel dieser Informationsverteilung kann zum Beispiel die Verwaltungssteuerung im Zugangsnetz des Kommunikationsnetzes UMTS sein, welche mit Hilfe dieser Information eine verbesserte Ressourcenbelegung ermittelt. Möglich ist aber auch die Weiterleitung solcher Informationen an externe Einrichtungen, beispielsweise an Netzwartungsterminals (Maintenance Terminals), Positionskontolleinheiten (Location Control Entities) HLR, VLR oder Paketnetze.

Die Informationen der Mobilitätsklassen können durch das Kommunikationsnetz UMTS auf verschiedene Art und Weise verwendet werden. Dies umfasst insbesondere Informationen über die Mobilitätsklassen MC für eine bestimmte oder mehrere teilnehmerseitige Stationen UE, abgeleitete Informationen, die zum Beispiel Statistiken über die Mobilitätsklassenverteilung in einer Zelle Z umfassen, oder kombinierte Informationen, bei denen die Mobilitätsklasse bzw. Mobilitätsklassen mit anderen Informationen kombiniert verwertet werden.

Möglich sind dadurch insbesondere eine Optimierung der Funk-und Mobilfunknetz-internen Ressourcen. Auch können Abläufe innerhalb des Kommunikationsnetzes bzw. Mobilfunknetzes sowie auf der Funkschnittstelle V optimiert werden. Diesbezüglich ist insbesondere die Reduzierung der Häufigkeit von Messungen anführbar, welche für eine statische teilnehmerseitige Station UE in geringerem Maße benötigt werden, als für mobile oder voll mobile teilnehmerseitige Stationen UE.

Bei der Bereitstellung von Diensten abhängig von der Mobilitätsklasse kann einer statischen teilnehmerseitigen Station UE beispielsweise bei reduziert erforderlichen Ressourcen für eine Fehlerkorrektur auch eine größere Bandbreite zugeteilt werden, als einer mobilen teilnehmerseitigen Station UE. Möglich ist auch die Beschränkung der Bereitstellung eines Dienstes mit hohen Qualitätsanforderungen auf niedrigere Mobilitätsklassen, wenn die erforderliche Dienstegüte im Fall einer voll mobilen teilnehmerseitigen Station UE nicht erreicht werden könnte.

Allgemein erhöht sich die Zuverlässigkeit von Diensten. Wird beispielsweise für die Bereitstellung eines Dienstes der tatsächliche Aufenthaltsort einer teilnehmerseitigen Station UE wichtig, so stellt die Information, dass diese teilnehmerseitige Station UE statisch bzw. ortsfest ist, sicher, dass dieser Dienst nach einer einmaligen Bestimmung des Aufenthaltsortes immer in einem zuverlässigen Maße bereit gestellt werden kann.

Insbesondere ist auch eine Kombination bzw. Zusammenarbeit mit Vergebührungseinrichtungen vorteilhaft einrichtbar. Dadurch kann ein Anreiz geschaffen werden, mit Blick auf eine klassenabhängig geringere Vergebührung Mobilitätsklassen und damit Ressourcen nur in dem tatsächlich benötigten Umfang zu belegen.

## Patentansprüche

1. Verfahren zur Steuerung zumindest einer teilnehmerseitigen Station (UE; UE') in einem Funk-Kommunikationssystem (UMTS; GSM), bei dem
eine Mobilität der zumindest einen teilnehmerseitigen Station (UE; UE') ermittelt wird,
der zumindest einen teilnehmerseitigen Station (UE; UE') eine der ermittelten Mobilität entsprechende Mobilitätsklasse (MC; MC-1, MC-2, ... MC-7) zugewiesen wird,
die der ermittelten Mobilität entsprechende Mobilitätsklasse (MC; MC-1, MC-2, ... MC-7) zwischen der zumindest einen teilnehmerseitigen Station (UE; UE') und einer netzseitigen Station (NB) übertragen wird, und
ein Zugriff der zumindest einen teilnehmerseitigen Station (UE; UE') auf die netzseitige Station (NB) abhängig von der zugewiesenen Mobilitätsklasse (MC; MC-1, MC-2, ... MC-7) gesteuert wird, falls der sich nicht oder nur in einem beschränkten Raum bewegenden zumindest einen teilnehmerseitigen Station (UE; UE') eine entsprechenden Mobilitätsklasse (MC; MC-1, MC-2, ... MC-7) zugewiesen wurde.

2. Verfahren nach Anspruch 1, bei dem
abhängig von der zugewiesene Mobilitätsklasse (MC; MC-1, MC-2, ... MC-7) eine Funkzellenauswahl und/oder Funkzellenwiederauswahl in der teilnehmerseitigen Station (UE) zeitlich gesteuert wird.

3. Verfahren nach Anspruch 1 oder 2, bei dem
abhängig von der zugewiesene Mobilitätklasse (MC; MC-1, MC-2, ... MC-7) bei einem Verbindungsaufbau zu der netzseitigen Station (NB) in der teilnehmerseitigen Station (UE) eine Sendeleistung für eine Übertragung einer Verbindungsanforderung gesteuert wird.

4. Verfahren nach einem vorstehenden Anspruch, bei dem mittels der Mobilititätsklassen (MC; MC-1, MC-2, ... MC-7) Mobilitätsinformation nach einer fest vorbestimmten Unterteilung eingeordnet werden.

5. Verfahren nach Anspruch 1, bei dem
die Mobilitätsklasse (MC; MC-1, MC-2, ... MC-7) von der teilnehmerseitigen Station (UE, UE') zu der netzseitigen Station (NB) übertragen wird, wobei die Mobilitätsklasse (MC; MC-1, MC-2, ... MC-7) seitens des Herstellers der teilnehmerseitigen Station (UE, UE'), seitens des Benutzers der teilnehmerseitigen Station (UE, UE') oder seitens eines aktivierten Dienstes auf der teilnehmerseitigen Station (UE, UE') ausgewählt oder festgelegt wurde, und/oder
die Mobilitätsklasse (MC; MC-1, MC-2, ... MC-7) von der netzseitigen Station (NB) zu der teilnehmerseitigen Station (UE, UE') übertragen wird, wobei die Mobilitätsklasse (MC; MC-1, MC-2, ... MC-7) seitens des Netzbetreibers oder einer weiteren netzseitigen Einrichtung (NB, RNC, MSC) festgelegt wurde.

6. Verfahren nach Anspruch 5, bei dem
die Verbindung (V, V') bei einem Überschreiten einer der zugewiesenen Mobilitätsklasse (MC; MC-1, MC-2, ... MC-7) entsprechenden Mobilität durch die teilnehmerseitige Station (UE, UE') mit oder ohne Einleitung einer Warnfunktion abgebrochen oder auf begrenzte verfügbare Ressourcen umgeschaltet wird.

7. Verfahren nach einem vorstehenden Anspruch, bei dem
die Mobilitätsklasse (MC; MC-1, MC-2, ... MC-7) über eine dedizierte Verbindung (V, V') und/oder einen Rundfunk-Kanal übertragen wird.

8. Verfahren nach einem vorstehenden Anspruch, bei dem
die Mobilitätsklasse (MC; MC-1, MC-2, ... MC-7) zusätzlich zwischen netzseitigen Einrichtungen (NB, RNC, MSC, XT, Einr., SGSN, GGSN, HLR, VLR) übertragen und für eine Steuerung von Ressourcen genutzt wird.

9. Verfahren nach einem vorstehenden Anspruch, bei dem
eine Periodizität einer Positionsbestimmung der teilnehmerseitigen Station (UE) abhängig von der zugewiesenen Mobilitätsklasse (MC; MC-1, MC-2, ... MC-7) gesteuert wird.

10. Verfahren nach einem vorstehenden Anspruch, bei dem abhängig von der zugewiesenen Mobilitätsklasse (MC; MC-1, MC-2, ... MC-7) bestimmte Dienste der teilnehmerseitigen Station (UE, UE') zur Verfügung gestellt werden.

11. Teilnehmerseitige Station (UE, UE') eines FunkKommunikationssystems, mit
- einer Einrichtung zum Senden und/oder Empfangen einer zugewiesenen Mobilitätsklasse (MC; MC-1, MC-2, ... MC-7) zu/von einer netzseitigen Station (NB) und/oder einer netzseitigen Steuereinrichtung (RNC, MSC), wobei die Mobilitätsklasse (MC; MC-1, MC-2, ... MC-7) entsprechend einer ermittelten Mobilität der teilnehmerseitigen Station (UE, UE') zugewiesen wurde,
- einem Speicher (USIM) zum dauerhaften oder temporären Speichern der zugewiesenen Mobilitätsklasse (MC; MC-1, MC-2, ... MC-7), und
- einer Steuereinrichtung zum Steuern der teilnehmerseitigen Station (UE, UE') abhängig von der zugewiesenen Mobilitätsklasse (MC; MC-1, MC-2, ... MC-7), wobei die Steuereinrichtung einen Zugriff auf die netzseitige Station (NB) steuert, falls der sich nicht oder nur in einem beschränkten Raum bewegenden teilnehmerseitigen Station (UE, UE') eine entsprechenden Mobilitätsklasse (MC; MC-1, MC-2, ... MC-7) zugewiesen wurde.

## Claims

1. Method for control at least of user equipment (UE; UE') in a radio communication system (UMTS; GSM), in which
a mobility of the at least one item of user equipment (UE; UE') is determined,
the at least one item of user equipment (UE; UE') is allocated a mobility class (MC;MC-1, MC-2, ... MC-7) corresponding to the mobility determined,
the mobility class (MC;MC-1, MC-2, ... MC-7) corresponding to the mobility determined is transmitted between the at least one item of user equipment (UE; UE') and a node B (NB), and an access by the at least one item of user equipment (UE; UE') to the node B station (NB) is controlled as a function of the allocated mobility class (MC; MC-1, MC-2, ... MC-7) if the at least one item of user equipment (UE;UE') which is not moving or is only moving within a restricted area has been allocated a corresponding mobility class (MC; MC-1, MC-2, ... MC-7).

2. Method in accordance with claim 1, in which
a timed radio cell selection or radio cell re-selection is controlled in the user equipment (UE), depending on the allocated mobility class (MC; MC-1, MC-2, ... MC-7).

3. Method in accordance with claim 1 or 2, in which
depending on the allocated mobility class (MC; MC-1, MC-2, ... MC-7), for a connection setup to the node B (NB) in the user equipment (UE) a transmit power for a transmission of a connection request is controlled.

4. Method in accordance with the previous claim, in which by means of the mobility classes (MC; MC-1, MC-2, ... MC-7) Mobility information is arranged in accordance with a fixed predetermined sub-division.

5. Method in accordance with claim 1, in which
the mobility class (MC; MC-1, MC-2, ... MC-7) of the user equipment (UE, UE') is transmitted to the node B (NB), with the mobility class (MC; MC-1, MC-2, ... MC-7) having been selected or determined by the manufacturer of the user equipment (UE, UE'), by the user of the user equipment (UE, UE') or by a service activated on the user equipment (UE, UE'), and/or
the mobility class (MC; MC-1, MC-2, ... MC-7) is transmitted from the node B (NB) to the user equipment (UE, UE'), with the mobility class (MC; MC-1, MC-2, ... MC-7) having been defined by the network operator or by a further network-side device (NB, RNC, MSC).

6. Method in accordance with claim 5, in which
the connection (V, V') is cleared down or switched over to limited-availability resources if the corresponding mobility assigned by one of the allocated mobility classes (MC; MC-1, MC-2, ... MC-7) is exceeded by the user equipment (UE, UE'), with or without the introduction of a warning function.

7. Method in accordance with the previous claim, in which the mobility class (MC; MC-1, MC-2, ... MC-7) is transmitted over a dedicated connection (V, V') and/or a broadcast channel.

8. Method in accordance with a previous claim, in which the mobility class (MC; MC-1, MC-2, ... MC-7) is additionally transmitted between network-side devices (NB, RNC, MSC, XT, Dev" SGSN, GGSN, HLR, VLR) and used for control of resources.

9. Method in accordance with previous claim, in which a periodicity of a position determination of the user equipment (UE) is controlled depending on the mobility class (MC; MC-1, MC-2, ... MC-7).

10. Method in accordance with a previous claim, in which, depending on the allocated mobility class (MC; MC-1, MC-2, ... MC-7) specific services are made available to the subscriber station (UE, UE').

11. User equipment (UE, UE') of a radio communication system, with
- a device for transmitting and/or receiving an assigned mobility class (MC; MC-1, MC-2, ... MC-7) to/from a node B (NB) and/or a network-side control device (RNC, MSC), with the mobility class (MC; MC-1, MC-2, ... MC-7) having been allocated in accordance with a mobility determined for the user equipment (UE, UE'),
- a memory (USIM) for permanent or temporary storage of the allocated mobility class (MC ;MC-1, MC-2, ... MC-7), and
- a control device for controlling the user equipment (UE, UE') as a function of the allocated mobility class (MC; MC-1, MC-2, ... MC-7), with the control device controlling access to the node B (NB) if the user equipment (UE, UE') which does not move at all or only moves within a restricted area has been assigned a corresponding mobility class (MC; MC-1, MC-2, ... MC-7).

## Revendications

1. Procédé de commande d'au moins une station côté abonné (UE ; UE') dans un système de radiocommunication (UMTS; GSM), dans lequel
une mobilité de l'au moins une station côté abonné (UE ; UE') est déterminée,
une classe de mobilité (MC ; MC-1, MC-2, ... MC-7) correspondant à la mobilité déterminée est affectée à l'au moins une station côté abonné (UE; UE'),
la classe de mobilité (MC ; MC-1, MC-2, ... MC-7) correspondant à la mobilité déterminée est transmise entre l'au moins une station côté abonné (UE ; UE') et une station côté réseau (NB), et
un accès de l'au moins une station côté abonné (UE; UE') à la station côté réseau (NB) est commandé en fonction de la classe de mobilité affectée (MC ; MC-1, MC-2, ... MC-7), au cas où une classe de mobilité correspondante (MC ; MC-1, MC-2, ... MC-7) est attribuée à l'au moins une station côté abonné (UE ; UE') ne se déplaçant pas ou seulement dans un espace limité.

2. Procédé selon la revendication 1, dans lequel
une sélection de cellule radio et/ou une nouvelle sélection de cellule radio est commandée temporellement dans la station côté abonné (UE) en fonction de la classe de mobilité attribuée (MC ; MC-1, MC-2, ... MC-7).

3. Procédé selon la revendication 1 ou 2, dans lequel
une puissance d'émission est commandée pour une transmission d'une demande de liaison, en fonction de la classe de mobilité attribuée (MC ; MC-1, MC-2, ... MC-7) lors d'un établissement de liaison vers la station côté réseau (NB) dans la station côté abonné (UE).

4. Procédé selon une revendication précédente, dans lequel
une information de mobilité est classée au moyen des classes de mobilité (MC ; MC-1, MC-2, ... MC-7) selon une subdivision prédéterminée de manière fixe.

5. Procédé selon la revendication 1, dans lequel
la classe de mobilité (MC ; MC-1, MC-2, ... MC-7) est transmise par la station côté abonné (UE ; UE') à la station côté réseau (NB), la classe de mobilité (MC ; MC-1, MC-2, ... MC-7) ayant été sélectionnée ou déterminée du côté du fabricant de la station côté abonné (UE ; UE'), du côté de l'utilisateur de la station côté abonné (UE ; UE') ou du côté d'un service activé sur la station côté abonné (UE ; UE'), et/ou
la classe de mobilité (MC ; MC-1, MC-2, ... MC-7) est transmise par la station côté réseau (NB) à la station côté abonné (UE ; UE'), la classe de mobilité (MC ; MC-1, MC-2, ... MC-7) ayant été déterminée du côté de l'opérateur du réseau ou d'un autre dispositif côté réseau (NB, RNC, MSC).

6. Procédé selon la revendication 5, dans lequel
la liaison (V, V') lors d'un dépassement par la station côté abonné (UE ; UE') d'une mobilité correspondant à la classe de mobilité attribuée (MC ; MC-1, MC-2, ... MC-7) est interrompue, avec ou sans introduction d'une fonction d'avertissement, ou est commutée sur des ressources disponibles de manière limitée.

7. Procédé selon une revendication précédente, dans lequel
la classe de mobilité (MC ; MC-1, MC-2, ... MC-7) est transmise par l'intermédiaire d'une liaison dédiée (V, V') et/ou d'un canal de radio diffusion.

8. Procédé selon une revendication précédente, dans lequel
la classe de mobilité (MC ; MC-1, MC-2, ... MC-7) est transmise en plus entre des dispositifs côté réseau (NB, RNC, MSC, XT, Einr., SGSN, GGSN, HLR, VLR) et est exploitée pour une commande de ressources.

9. Procédé selon une revendication précédente, dans lequel une périodicité d'une détermination de position de la station côté abonné (UE) est commandée en fonction de la classe de mobilité attribuée (MC ; MC-1, MC-2, ... MC-7).

10. Procédé selon une revendication précédente, dans lequel des services déterminés sont fournis à la station côté abonné (UE ; UE') en fonction de la classe de mobilité attribuée (MC ; MC-1, MC-2, ... MC-7).

11. Station côté abonné (UE ; UE') d'un système de radiocommunication, comprenant
- un dispositif d'émission et/ou de réception d'une classe de mobilité attribuée (MC ; MC-1, MC-2, ... MC-7) à/par une station côté réseau (NB) et/ou un dispositif de commande côté réseau (RNC, MSC), la classe de mobilité (MC ; MC-1, MC-2, ... MC-7) ayant été attribuée de manière correspondant à une mobilité déterminée de la station côté abonné (UE, UE'),
- une mémoire (USIM) pour la mémorisation durable ou temporaire de la classe de mobilité attribuée (MC ; MC-1, MC-2, ... MC-7), et
- un dispositif de commande pour la commande de la station côté abonné (UE, UE') en fonction de la classe de mobilité attribuée (MC ; MC-1, MC-2, ... MC-7), le dispositif de commande commandant un accès à la station côté réseau (NB) au cas où une classe de mobilité correspondante (MC ; MC-1, MC-2, ... MC-7) a été attribuée à la station côté abonné (UE; UE') ne se déplaçant pas ou seulement dans un espace limité.
